# EUROPEAN PATENT SPECIFICATION

(11) **EP 1 571 408 B1**
(45) Date of publication and mention of the grant of the patent: **06.11.2013**
(21) Application number: 03778772.8
(22) Date of filing: 10.12.2003
(51) Int. Cl.: F28F 1/40

(54) **METHOD FOR PRODUCING CROSS-FIN TUBE FOR HEAT EXCHANGER, AND CROSS FIN-TYPE HEAT EXCHANGER**
VERFAHREN ZUR HERSTELLUNG EINES KREUZRIPPENROHRS FÜR WÄRMETAUSCHER UND KREUZRIPPENARTIGER WÄRMETAUSCHER
PROCEDE DE PRODUCTION D'UN TUBE A AILETTES TRANSVERSALES DESTINE A UN ECHANGEUR THERMIQUE ET ECHANGEUR THERMIQUE DE TYPE A AILETTES TRANSVERSALES

(30) Priority: 12.12.2002 JP 2002360484
(43) Date of publication of application: 07.09.2005
(73) Proprietor: SUMITOMO LIGHT METAL INDUSTRIES, LTD., Minato-ku, Tokyo 105-0004 (JP)
(72) Inventor: Kondo, Takashi, Minato-ku, Tokyo 105-0004 (JP); Sasaki, Naoe, Minato-ku, Tokyo 105-0004 (JP); Kakiyama, Shiro, Minato-ku, Tokyo 105-0004 (JP)
(74) Representative: TBK
(86) International application number: PCT/JP2003/015785
(87) International publication number: WO 2004/053415

(56) References cited:
- JP-A- 51 140 865
- JP-U- 55 162 789

## Description

### TECHNICAL FIELD

The present invention relates to a method of manufacturing a cross fin tube for a heat exchanger according to the preamble of claim 1, and more particularly to an advantageous method of manufacturing a cross fin tube structured such that an internally grooved heat transfer tube is inserted to prescribed assembling holes in heat dissipating fins and the heat transfer tube is thereafter expanded and firmly fixed. An exemplary method is known from JP-A-58 188 519.

### BACKGROUND ART

Conventionally, a heat exchanger working as an evaporator or a condenser is employed in an air conditioning equipment such as a home air conditioner, a car air conditioner, a package air conditioner and the like, a refrigerator and the like. Among them, in a room air conditioner for home use and a package air conditioner for business use, a cross fin type heat exchanger is most generally employed. The cross fin type heat exchanger is provided with a cross fin tube, and the cross fin tube is structured such that aluminum plate fins in an air side and a heat transfer tube (a copper tube) in a refrigerant side are fixed integrally to each other. As well known, the cross fin tube mentioned above is manufactured by initially, preparing the aluminum plate fins in which a plurality of prescribed assembling holes are formed, in accordance with a press molding or the like; next, stacking the obtained aluminum plate fins; then, inserting the separately manufactured heat transfer tube into inner portions of the assembling holes; and thereafter firmly fixing the heat transfer tube to the aluminum plate fins in an expanding manner.

As the heat transfer tube used in the cross fin type heat exchanger mentioned above, a so-called internally grooved heat transfer tube may be employed. That is, the internally grooved heat transfer tube has a multiplicity of grooves, e.g. a multiplicity of spiral grooves extending with a prescribed helix angle with respect to a tube axis, on the inner surface of the tube so that internal fins or ridges having a prescribed height are formed between the grooves. In recent years, for the purpose of a high performance requirement of the heat exchanger, there have been proposed various structures in which the internal grooves of the heat transfer tube are made deeper and the internal fins are made narrower. In addition, for the purpose of the further high performance, it has been proposed to optimize the groove depth, the groove depth/inner diameter, an apex angle of the fins, the helix angle, a cross sectional area of the groove portion/groove depth, and the like.

For example, in JP-A-3-234302 and JP-A- 8-303905, there is disclosed an internally grooved heat transfer tube which has, on an inner surface thereof, a multiplicity of main grooves extending spirally in a direction of the tube axis and a multiplicity of sub grooves extending in a direction which intersects the main grooves to make a cross groove structure effective. More concretely, the main grooves are formed so as to be shifted (be offset) in the tube axial direction with holding the crossing portions to the sub grooves therebetween. In the case of using the internally grooved heat transfer tube mentioned above as a condensation tube in the condenser, a concentration boundary layer formed by a heat transfer medium which is condensed so as to be liquefied and the heat transfer medium which is not condensed yet and is left in a gas state, is renewed securely in the crossing portions between the main grooves and the sub grooves. Accordingly, since a diffusion resistance of a concentration can be lowered, a high condensation performance can be achieved.

When the heat exchanger is assembled using the internally grooved heat transfer tube, it is necessary to expand the heat transfer tube within fixing holes provided in heat dissipating fins so as to make the heat transfer tube closely contact with the heat dissipating fins. As methods of expanding the heat transfer tube, for example, a hydraulically tube-expanding method and a mechanically tube-expanding method are well known. That is, the hydraulically tube-expanding method is to expand the heat transfer tube by charging a liquid such as a water, an oil or the like into the heat transfer tube and applying a pressure to the charged liquid, and the mechanically tube-expanding method is to expand the heat transfer tube by inserting a tube-expanding plug or tool having a larger diameter than an inner diameter of the heat transfer tube to an inner portion of the heat transfer tube, and driving in the tube-expanding plug.

In the tube-expanding methods, since the mechanically tube-expanding method using the tube-expanding plug does not require special techniques in comparison with the hydraulically tube-expanding method, the mechanically tube-expanding method is excellent in a mass production property and, therefore, is generally frequently used. However, in accordance with the mechanically tube-expanding method using the tube-expanding plug, when the internally grooved heat transfer tube and the heat dissipating fins are fixed to each other to assemble the target heat exchanger, the internal fins or ridges previously formed on the inner surface of the heat transfer tube are pressed to an outer side in a diametrical direction and a tube axial direction, owing to a mechanically tube-expanding effect, in particular, owing to the tube-expanding plug inserted into the tube. Accordingly, the internal fins are undesirably exposed to a deformation process, collapsed, and come down, whereby the height of the fins becomes low. As a result, the contact area with the refrigerant flowing within the tube is undesirably reduced, so that there is a problem that an adverse effect is applied to a heat transfer performance. On the contrary, in accordance with the hydraulically tube-expanding method, the problem as mentioned above that the internal fins are collapsed at a time of expanding the tube is not generated. However, since a complicated arrangement is required for charging the liquid into the heat transfer tube and applying the pressure to the charged liquid, there is a problem that the method is inferior in view of the mass production property.

On the other hand, in JP-A-2-137631, there is proposed a method of obtaining a condensing heat transfer tube having cross grooves formed on an inner surface thereof at the same time of a tube-expanding operation. More specifically described, when the heat transfer tube, which has spiral grooves or grooves orthogonal to the tube axis on the inner surface thereof, is expanded by inserting the tube-expanding plug into the inner portion of the heat transfer tube, projections provided on an outer surface of the tube-expanding plug continuously divide the grooves on the inner surface of the tube to form the cross grooves on an inner surface of the tube. Namely, according to the tube-expanding method, primary grooves provided on the inner surface of the heat transfer tube are divided by the projections provided on the outer surface of the tube-expanding plug at the same time of expanding the heat transfer tube, and secondary grooves having a larger groove depth than that of the primary grooves are formed so as to intersect the primary grooves in the inner surface of the tube.

However, in the cross fin tube manufactured in accordance with the above-mentioned manufacturing method, the primary grooves previously formed on the inner surface of the heat transfer tube are divided by the projections provided on the outer surface of the inserted tube expanding plug, in other words, a ridge or rib portion located between the adjacent primary grooves are completely divided, and the secondary grooves extending to intersect the primary grooves are formed to have the larger depth than the depth of the primary grooves. As a result, a sweeping-up phenomenon of refrigerant solution can be widely inhibited, so that the condensing performance is improved. However, since a contact area between the refrigerant and the heat transfer tube is reduced due to the divide of the primary grooves, there is a problem that an evaporating performance of the refrigerant is lowered.

Further, since the secondary grooves are formed by completely dividing the primary grooves provided on the inner surface of the tube by means of the projections provided on the outer surface of the tube-expanding plug, a collapsing amount of the fins is undesirably increased, so that burrs are formed to protrude to inner sides of the primary grooves. The burrs cause an increase of a pressure drop, whereby there is a problem that a heat exchanging performance is lowered, in particular, an evaporation performance greatly affected by the pressure drop is lowered.

### DISCLOSURE OF THE INVENTION

The present invention was developed under the above-described situations. It is therefore an object of the present invention to provide a method suitable for manufacturing a cross fin tube in which an evaporation performance and a condensation performance are not lowered, when an internally grooved heat transfer tube is expanded in accordance with a mechanically tube-expanding operation and fixed integrally to heat dissipating fins, and a cross fin type heat exchanger including the cross fin tube obtained in accordance with such a manufacturing method.

In order to achieve the above-identified technical object, the present invention provides a method of manufacturing a cross fin tube for a heat exchanger, the cross fin tube including an internally grooved heat transfer tube having a multiplicity of primary grooves formed in an inner surface thereof and heat dissipating fins, the heat transfer tube and the heat dissipating fins being fixed integrally to each other such that the heat transfer tube being mechanically expanded by a tube-expanding plug which is inserted into the heat transfer tube with the heat transfer tube being in a state in which the heat transfer tube is inserted in fixing holes of the heat dissipating fins, wherein the tube-expanding plug has cutout-forming protuberances which are formed on an outer circumferential surface thereof with a number of 60-160 per circumference such that the cutout-forming protuberances extend in a direction which intersects the primary grooves, the heat transfer tube and the heat dissipating fins being brought into intimate contact with each other when the tube-expanding plug is inserted into said heat transfer tube, and that the cutout-forming protuberances divide a ridge located between the adjacent two primary grooves into sections to form notches, for thereby forming secondary grooves which are cross grooves with respect to the primary grooves, the secondary grooves having a depth which is held in a range of 10-40 % of a height of said ridge between said adjacent two primary grooves.

Namely, according to the method of manufacturing the cross fin tube for the heat exchanger on the basis of the present invention, by the means of the cutout-forming protuberances formed on an outer circumferential surface of the tube-expanding plug, the internally grooved heat transfer tube are expanded, so that the heat transfer tube and the heat dissipating fins are fixed integrally to each other. At the same time, the cutout-forming protuberances divide ridges located between a multiplicity of the primary grooves, which are previously formed on the inner surface of the heat transfer tube, into sections to form cutouts or notches, for thereby forming the secondary grooves which are the cross grooves with respect to the primary grooves. Accordingly, it is possible to easily bring integrally the heat transfer tube into intimate contact with the heat dissipating fins, and therefore it is possible to advantageously improve a productivity of the heat exchanger. Further, since in the other portions of the primary grooves than the portions formed as the cross grooves, internal fins are kept in the state before being expanded without being collapsed in accordance with the tube expansion, the collapse of the internal fins is limited to parts. Accordingly, it is possible to effectively inhibit the reduction of the evaporation performance caused by the reduction of the heat transfer performance, in particular, the reduction of the contact area between the refrigerant flowing within the tube and the internal fins.

Further, in the method according to the present invention, by the means of the cutout-forming protuberances formed on the outer circumference of the tube-expanding plug, the number of the secondary grooves formed in the ridges between the primary grooves is set to 60-160 per circumference of the tube inner circumferential surface. Therefore, it is possible to effectively achieve a turbulent flow accelerating effect of the refrigerant solution owing to the cross groove. In this case, the problem of the fin collapse, the fin come-down or the like are not generated while such problems are generated in the case of executing the tube expansion by using the tube-expanding plug having a smooth surface. Accordingly, it is possible to advantageously secure the contact area between the refrigerant and the heat transfer tube and the heat transmitting performance can be improved, whereby the evaporation performance and the condensation performance can be effectively improved.

In addition, according to the present invention, by the tube expanding-plug, the ridges between the primary grooves are divided into sections to form notches so as to form the secondary grooves having a depth which is held in a range of 10-40 %. In this case, the burrs protruding to inner sides of the primary grooves are hardly generated, in comparison with the conventional case that the secondary grooves are formed by completely dividing the primary grooves. Thus, it is possible to effectively avoid a risk that the pressure drop caused by the generation of the burrs is increased, and it is possible to advantageously inhibit the contact area between the refrigerant and the heat transfer tube from being reduced, whereby the high condensation performance and the high evaporation performance can be advantageously achieved.

In one preferred form of the method of manufacturing the cross fin tube for a heat exchanger in accordance with the present invention, the primary grooves are spiral grooves which are formed to extend with a prescribed helix angle with respect to a tube axis of the heat transfer tube, while the secondary grooves are substantially linear grooves which are formed to extend in a direction of the tube axis. By employing the structure mentioned above, the object of the present invention can be better achieved.

Further, according to the present invention, taking into consideration a heat transfer area or the like, a number of the primary grooves of the internally grooved heat transfer tube is held preferably in a range or 30-80 per circumference.

Further, in another preferred form of the method of manufacturing the cross fin tube for a heat exchanger in accordance with the present invention, the primary grooves has a cross sectional shape cut along a plane perpendicular to the direction of the tube axis of the heat transfer tube, and the cross sectional shape is a trapezoid or a U-shape.

In addition, in still another preferred form of the method of manufacturing the cross fin tube for a heat exchanger in accordance with the present invention, the helix angle of the primary grooves with respect to the tube axis of the heat transfer tube is held in a range of 10-50°, in order to secure an effective heat transfer performance and easily form the grooves in accordance with a form rolling.

Further, in the method of manufacturing the cross fin tube for a heat exchanger in accordance with the present invention, the internally grooved heat transfer tube preferably has an outside diameter of 4-10 mm, the primary grooves preferably have a depth of 0.10-0.30 mm, and the heat transfer tube preferably has a thickness of 0.20-0.30 mm at portions thereof at which the primary grooves are formed and which define bottoms of the primary grooves.

Further, in the method of manufacturing the cross fin tube for a heat exchanger in accordance with the present invention, the ridge between the adjacent two primary grooves preferably has an apex angle which is held in a range of 15-50°, in order to secure an effective heat transfer performance and achieve an easiness of forming the grooves according to a form rolling.

In addition, in the method of manufacturing the cross fin tube for a heat exchanger in accordance with the present invention, as a material of the heat transfer tube, a copper or a copper alloy is preferably employed. As a material of the heat dissipating fins, an aluminum or an aluminum alloy is preferably employed.

Further, in still another preferred form of the method of manufacturing the cross fin tube for a heat exchanger in accordance with the present invention, the secondary grooves are formed in the shape of a V groove, a U groove or a trapezoidal groove.

In a cross fin type heat exchanger obtained in accordance with the manufacturing method, as mentioned above, it is possible to achieve the improved evaporation performance and condensation performance, and no special techniques are required for manufacturing the cross fin type heat exchanger. Accordingly, a mass production property can be advantageously improved.

### BRIEF DESCRIPTION OF THE DRAWINGS

Fig. 1 is a cross sectional explanatory view schematically showing a step of manufacturing a cross fin tube in accordance with a mechanically tube-expanding operation;
Fig. 2 is a partly-enlarged cross sectional explanatory view showing an example of an internally grooved heat transfer tube which is used in a method of manufacturing a cross fin tube in accordance with the present invention;

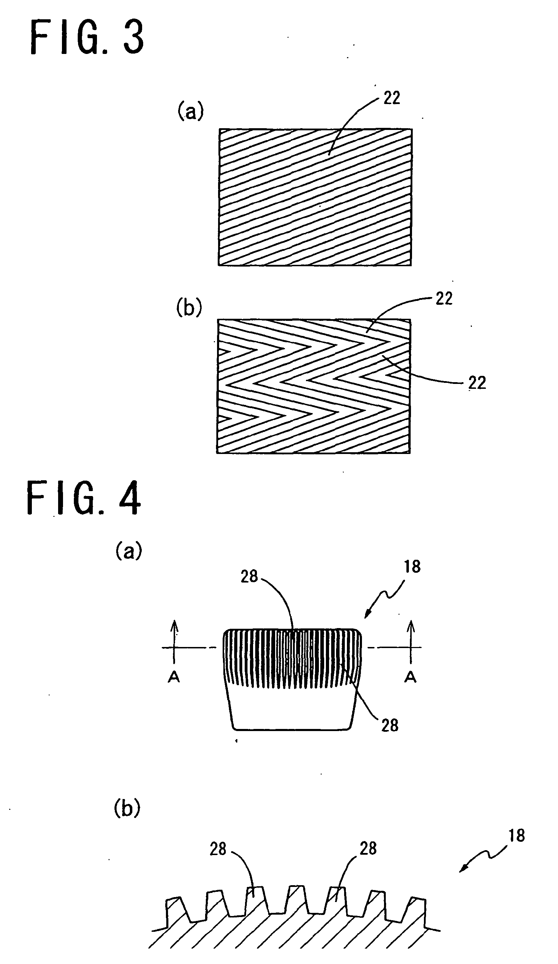

Figs. 3a and 3b are development views showing an example of an arranging pattern of an internal groove in the internally grooved heat transfer tube which is used in the method of manufacturing the cross fin tube in accordance with the present invention, in which Fig. 3a shows a pattern of a spiral groove extending at a predetermined pitch angle in a tube axial direction (a lateral direction in the drawing), and Fig. 3b shows a pattern of a zigzag groove obtained by combining V-shaped groove patterns in which a direction of incline is reverted every predetermined zones in a tube peripheral direction (a vertical direction in the drawing);
Figs. 4a and 4b are explanatory views showing an example of a tube-expanding plug used in the method of manufacturing the cross fin tube in accordance with the present invention, in which Fig. 4a is a front elevational view, and Fig. 4b is a cross sectional explanatory view in which the tube-expanding plug is cut along a line A-A in Fig. 4a and a part of the tube expanding plug is enlarged;
Fig. 5 is an explanatory view showing a part of a tube inner surface of the cross fin tube manufactured in accordance with the manufacturing method of the present invention in a developing manner;
Fig. 6 is a partly-enlarged cross sectional explanatory view of the cross fin tube manufactured in accordance with the manufacturing method of the present invention, and shows a cross section along a line B-B in Fig. 5;
Fig. 7 is a scanning electron microscope (SEM) photograph showing an aspect of the inner surface of the heat transfer tube after a tube-expanding operation is applied in accordance with the present invention, in an embodiment 2;
Fig. 8 is an explanatory view showing a circulating state of a refrigerant, in a test apparatus which is used for measuring a simple substance performance of the heat exchanger in the embodiment; and
Fig. 9 is a graph showing a performance ratio of an evaporation performance and a condensation performance in various heat exchangers obtained in the Examples, in comparison with a comparative Example 1.

### BEST MODE FOR CARRYING OUT THE INVENTION

In order to specifically clarify the present invention, a description will be in detail given below of a method of manufacturing a cross fin tube for a heat exchanger in accordance with the present invention, and further of a cross fin type heat exchanger employing the cross fin tube obtained thereby, with reference to the accompanying drawings.

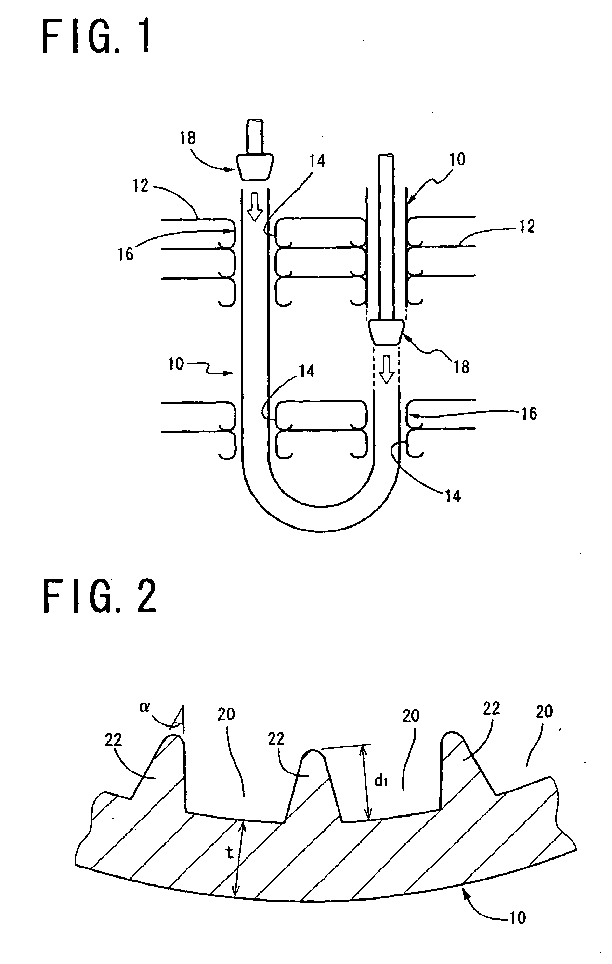

First of all, Fig. 1 schematically shows a step of mechanically expanding an internally grooved heat transfer tube and fixing integrally the internally grooved heat transfer tube to a heat dissipating fins, in case of manufacturing a cross fin type heat exchanger, thereby obtaining the cross fin tube. In other words, in Fig. 1, a heat transfer tube 10 is an internally grooved heat transfer tube structured by a prescribed metal material which is appropriately selected from a copper, a copper alloy and the like in correspondence to a required heat transmitting performance and an employed heat transmitting medium. In this case, the heat transfer tube 10 is used in a U shape. On the other hand, a plate fin 12 corresponding to a plate-like heat dissipating fin is made of a prescribed metal material such as an aluminum, an aluminum alloy or the like. Also, the plate fin 12 is formed in a structure in which fixing holes 14 having a predetermined size larger than an outer diameter of the heat transfer tube 10 is integrally provided with fin collars 16 therearound. A plurality of plate fins 12 are overlapped or stacked under a state in which the respective fixing holes 14 are aligned with each other (so as to penetrate in a vertical direction, in the drawing), and the heat transfer tube 10 is inserted in and arranged in the aligned fixing holes 14.

The mechanically tube-expanding operation is performed or achieved by inserting a tube-expanding plug 18 into the heat transfer tube 10 from an open end portion of the heat transfer tube 10, in accordance with a well-known manner, under a state in which the heat transfer tube 10 is inserted in the fixing holes 14 of the plate fins 12 (a state of a left side portion in Fig. 1), and forward moving the inserted tube-expanding plug 18 within the heat transfer tube 10. Accordingly, the heat transfer tube 10 is closely contacted with the fixing holes 14, specifically, the heat transfer tube 10 is closely contacted with an inner circumferential surface of the fin collars 16 (refer to a fixed state of the heat transfer tube 10 within the fixing holes 14, in a right side portion showing a state after the tube-expanding plug 18 passes therethrough, in Fig. 1), while expanding the heat transfer tube 10, whereby the heat transfer tube 10 and the plate fins 12 are fixed to each other. Thus, it is possible to form the cross fin tube in which the heat transfer tube 10 and the plate fins 12 are integrally combined.

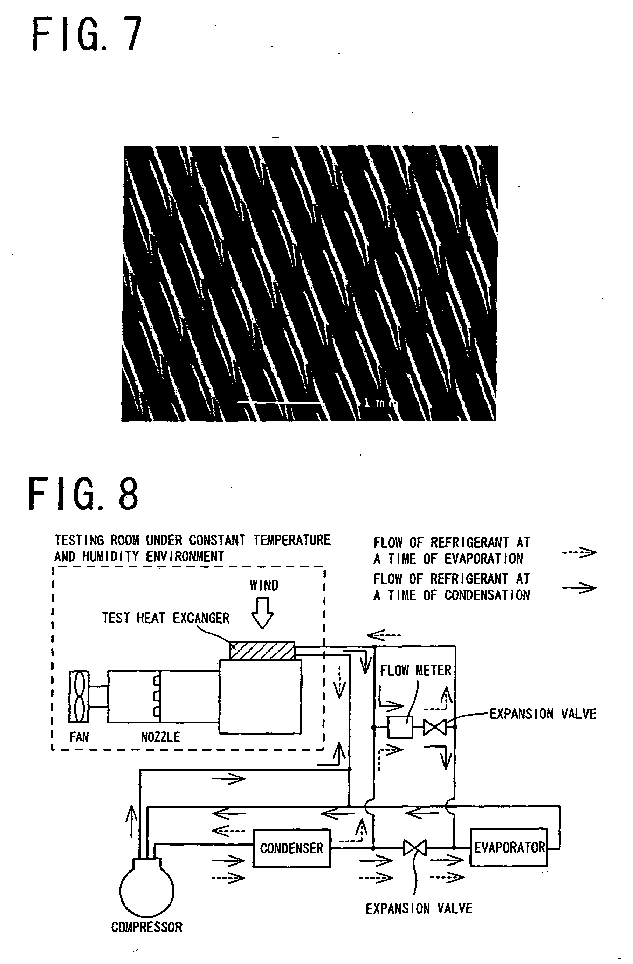

In the method of manufacturing the cross fin tube in accordance with the present invention, as the heat transfer tube 10, there may be used various known internally grooved heat transfer tube having a multiplicity of primary grooves on the inner surface thereof, and the ridges (the internal fins) formed with a prescribed height between the primary grooves. Such internally grooved heat transfer tube 10 is manufactured by using a known form rolling method, a rolling method or the like, for example, as described in JP-A-2002-5588 or the like. In this connection, in the case of using a form rolling apparatus as shown in Fig. 4 of the publication, when a continuous raw tube is passed through the form rolling apparatus, the raw tube is pressed between a grooved plug inserted into an inside of the raw tube and circular dies arranged in an outer circumferential portion of the tube. Thus, prescribed grooves are continuously formed on the inner circumferential surface of the tube at the same time of contracting the diameter. On the other hand, in the case that the internally grooved heat transfer tube is manufactured by utilizing the rolling method, a grooving work and a tube forming work are applied to material of a continuous band plate in accordance with a prescribed rolling work while the band plate is moved in a longitudinal direction, with using a working apparatus having a structure as shown in Fig. 7 of the publication. Accordingly, the aimed internally grooved heat transfer tube can be manufactured.

Further, the heat transfer tube 10 corresponding to the internally grooved heat transfer tube used in the present invention is structured such that a militiplicity of primary grooves 20 formed in a trapezoidal shape having a short side constituted by a bottom side are formed on the inner surface of the tube to extend in a tube circumferential direction and to extend with a prescribed helix angle with respect to a tube axis, and a internal fin 22 having a prescribed height is formed between the adjacent two primary grooves, as exemplified in Fig. 2 showing in an enlarged manner a part of an end surface obtained by cutting the heat transfer tube 10 by a vertical surface to the tube axis. In the heat transfer tube 10 mentioned above, a tube diameter of the heat transfer tube 10, shapes and depths of the primary grooves 20 and the internal fins 22 are appropriately selected, and generally, a tube outside diameter is preferably held in a range of 4-10 mm; a groove depth (d₁) is preferably held in a range of 0.10-0.30 mm; and a tube thickness (t) at groove forming portion is preferably held in a range of 0.20-0.30 mm. As the primary grooves 20 previously formed in the internally grooved heat transfer tube, it is possible to advantageously employ a structure in which the helix angle of the primary grooves 20 with respect to the tube axis is held in a range of 10-50°, and an apex angle (α) of the internal fins 22 is held in a range of 15-50°, in view of securing an effective heat transmitting performance and easiness for forming the groove in accordance with the form rolling. In addition, a number of the primary grooves 20 formed on the inner surface of the tube is advantageously held in a range of 30-80 per circumference, taking into consideration the heat transfer area and so on. In addition, as the shape of the primary grooves (20), besides a trapezoid shown in Fig. 2, various shapes such as a U-shape can be employed.

Further, the internally grooved heat transfer tube 10 in the present invention may be appropriately selected from among various types of internally grooved heat transfer tube, for example, internally grooved heat transfer tubes, having a spiral groove structure in which the primary grooves 20 are formed to extend with prescribed helix angle with respect the tube axial direction (a lateral direction in the drawing) as shown in a development view of the inner surface of the tube in Fig. 3a, and having a zigzag groove structure obtained by combining the primary grooves 20 in a V-shaped groove pattern in which the direction of incline of the primary groove 20 is set in a reverse direction to each other in adjacent areas as shown in Fig. 3b. The present invention can be preferably applied to any selected internally grooved heat transfer tube.

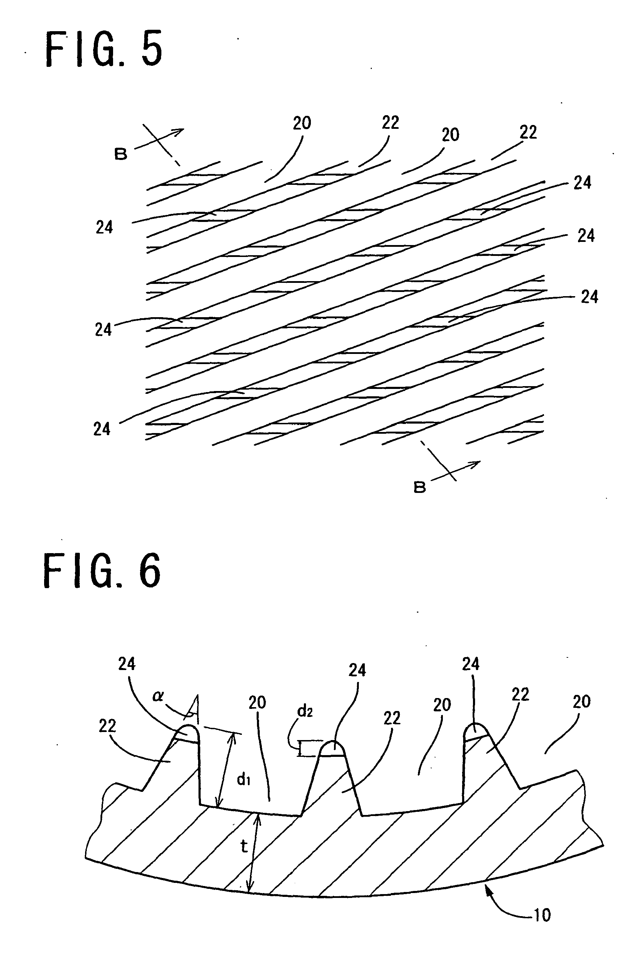

In the present invention, when the heat transfer tube 10 and the heat dissipating fins 12 are fixed integrally to each other in accordance with the mechanically tube-expanding method, the heat transfer tube 10 is expanded by the means of a plurality of cutout-forming protuberances 28 which are provided in a parallel to each other in an axial direction on an outer circumferential surface of the tube-expanding plug 18 as shown in Fig. 4. At the same time, the cutout-forming protuberances 28 divide top portions of the internal fins 22 into sections to form cutouts or notches, whereby secondary grooves 24 a number of which corresponds to a number of the cutout-forming protuberances 28 are formed in upper portions of the internal fins 22, as shown in Figs. 5 and 6. In this case, the shape of the secondary grooves 24 may be selected from among various shapes such as a V groove, a U groove, a trapezoidal groove and the like. Accordingly, the cutout-forming protuberances 28 are formed in a shape corresponding to the shape of the secondary grooves 24.

As mentioned above, in addition to a plurality of primary grooves 20 previously formed on the inner surface of the heat transfer tube 10, a multiplicity of secondary grooves 24 are formed so as to cross to the primary grooves 20. Accordingly, an effect of facilitating a turbulent flow of the refrigerant within the heat transfer tube 10 can be sufficiently achieved, and therefore that the evaporation performance and the condensation performance can be effectively improved. Further, when the heat transfer tube 10 is expanded, the heat transfer tube 10, more specifically described, the upper portions of the internal fins 22 with which the outer circumferential surface of the tube-expanding plug is brought into contact, are pressed only by the cutout-forming protuberances 28 of the tube-expanding plug 18. Accordingly, the collapse and the deformation of the internal fins 22 which may be generated at a time of expanding the tube can be advantageously inhibited. Therefore, it is possible to advantageously avoid the problems that the evaporation performance and the condensation performance are lowered, which is generated due to the reduction of the contact area between the refrigerant flowing through the inner surface of the tube and the heat transfer tube.

In accordance with the present invention, for improving a heat transmitting property as well as effectively inhibiting the fin deformation such as the fin collapse, the fin come-down and the like of the internal fins formed on the inner surface of the heat transfer tube 10, which may be generated at a time of fixing the heat transfer tube 10 to the plate fins 12 in accordance with the mechanically tube-expanding method, the number of the cutout-forming protuberances 28 provided on the outer circumferential surface of the tube-expanding plug 18 is set to 60-160 per circumference. Accordingly, the number of the secondary grooves 24 which are formed at the same time of the mechanically tube-expansion is also set to 60-160 per circumference. If the number of the secondary grooves 24 is smaller than 60 per circumference, since the cross grooved portions by the primary grooves 20 and the secondary grooves 24 are less, the sufficient turbulent flow facilitating effect can not be obtained. On the contrary, if the number of secondary grooves 24 is larger than 160 per circumference, though the cross grooved portions are more, since most of the upper portions of the internal fins 22 are cross-grooved, so that an extremely similar groove shape to that of the case that the mechanically tube-expansion is executed by using the tube-expanding plug having the smooth outer surface is formed, and the contact area between the refrigerant and the heat transfer tube is reduced. As a result, the reduction of the evaporation performance and the condensation performance is generated, and the object of the present invention can not be sufficiently achieved.

Further, in accordance with the present invention, the secondary grooves 24 forming the cross grooves with respect to the primary grooves 20, which are formed in the upper portions of the internal fins 22 by the cutout-forming protuberances 28 provided on the outer surface of the tube-expanding plug 18, have a depth (d₂) which is held in a range of 10-40 % of a depth d₁ of the primary grooves 20 (and a height of the internal fins 22). If the depth d₂ of the formed secondary grooves 24 is smaller than 10 % of the depth d₁ of the previously formed primary grooves 20, since the depth of the secondary grooves 24 is too shallow, the sufficient turbulent flow facilitating effect can not be obtained. On the other hand, if the depth d2 of the secondary grooves 24 is larger than 40 % of the depth d1 of the primary grooves 20, the internal fin 22 positioned between the adjacent two primary grooves 20 is largely collapsed owing to forming the secondary grooves 24, and the contact area between the refrigerant and the heat transfer tube is reduced, so that the evaporation performance and the condensation performance of the heat transfer tube 10 are lowered. Specifically, as the secondary grooves 24 are formed to have a deeper depth, the lager burrs protrude to the portion between the internal fin 22 and the internal fin 22, in other words, to an inner side of each primary grooves 20, at a time of collapsing the internal fins 22 so as to form the secondary grooves 24. Accordingly, the evaporation performance is particularly lowered.

A cross fin type heat exchanger formed in accordance with the method of the present invention is assembled to have the same structure as the conventional one, and to include the cross fin tube obtained in the above-mentioned manner and the known various parts such as the header or the like which are mounted to the cross fin tube. Such a cross fin type heat exchanger can achieve excellent features as the heat exchanger owing to employing the cross fin tube achieving the properties mentioned above.

As mentioned above, a description will be given in detail of the representative embodiments of the method of manufacturing the cross fin tube for a heat exchanger in accordance with the present invention, and further of a heat exchanger formed in accordance with the present invention using the obtained cross fin tube. However, the present invention may be embodied with various other changes, modifications and improvements, which may occur to those skilled in the art. It is to be understood that these embodied forms are included in the scope of the present invention as claimed.

### EXAMPLES

To further clarify the concept of the present invention, representative embodiments of the invention will be described. It is to be understood that this invention is not limited to the details of illustrated examples.

Initially, as the internally grooved heat transfer tube, there is prepared a heat transfer tube (phosphor deoxidized copper tube: JIS H3300 C1220) in which a tube outer diameter prior to mechanically tube-expansion is 7.0 mm, a tube thickness (t) is 0.25 mm, a primary groove depth (d₁) is 0.24 mm, a helix angle of the primary grooves is 15°, a fin apex angle (α) is 15°, and a number of the primary grooves 20 is 50. Next, the heat transfer tube 10 and aluminum plate fins 12 that has gone through surface treatment are combined in order to manufacture a cross fin type test heat exchanger having a width of 430 mm, a height of 250 mm, a thickness of 20 mm and a structure of two rows and twelve stages.

Specifically, as shown in Fig. 1, the mechanically tube-expanding operation is executed so as to fix integrally the heat transfer tube 10 and the aluminum plate fins 12 to each other. According to the above manner, a plurality of such heat exchangers are manufactured by using various tube-expanding plugs 18 having protuberances provided on the outer circumferential surface thereof with a number of 60-160 at the time of tube-expansion operation, so that various heat exchangers provided with the primary grooves 20 and the secondary grooves 24 and having values as shown in Examples 1 to 6 in the following Table 1 are manufactured. Further, as Comparative Examples with respect to Examples in accordance with the present invention, the following heat exchangers are manufactured. A heat exchanger of Comparative Example 1 is manufactured in the same manner as the conventional one by using a tube expanding plug in which the outer surface is formed as a smooth surface. A heat exchanger of Comparative Example 2 is manufactured to have secondary grooves 24 a number of which is 40 and namely, is smaller than the numbers of Examples 1 to 6. A heat exchanger of Comparative Example 3 is manufactured to have secondary grooves a number of which is 180 and namely is larger than the numbers of the Examples 1 to 6. More specified data thereof are also indicated in Table 1. In Table 1, each of the values of the primary groove 20 indicates a dimension after the internal fins which are previously formed on the inner surface of the tube are mechanically expanded, and each of values of the secondary groove 24 indicates a dimension of the groove which is formed by the protuberances of the tube-expanding plug.

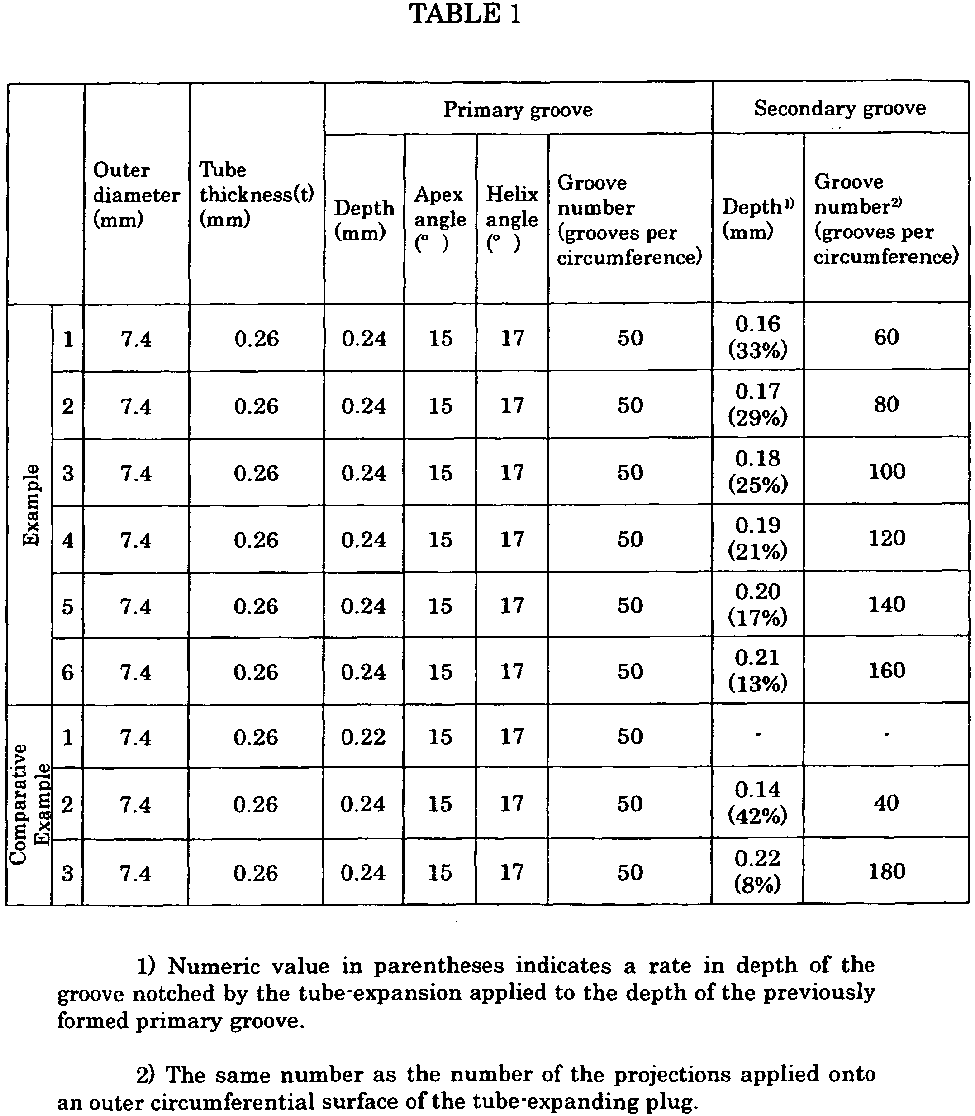

A state of the inner surface of the heat transfer tube after the tube-expanding operation in accordance with Example 2 is shown in Fig. 7 by a scanning electron microscope (SEM) photograph. It is recognized in the photograph that the secondary grooves 24 extending in the vertical direction are formed so as to cross to the primary groove 20 extending from the left upper side to the right lower side.

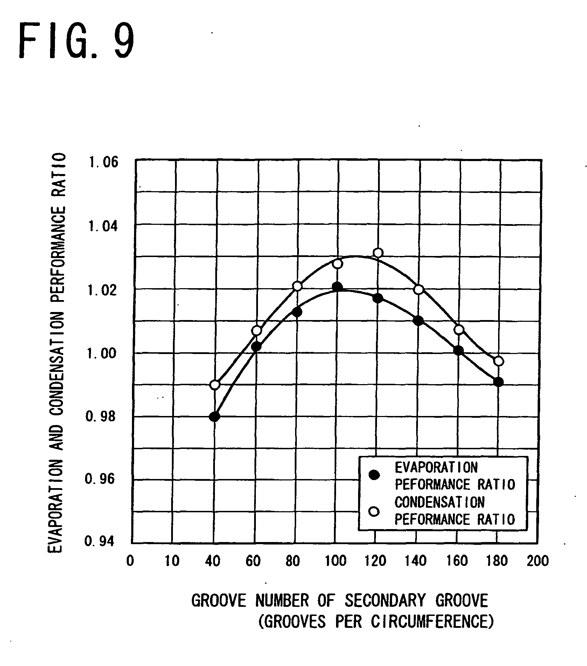

Next, the following tests are applied to each of the obtained heat exchangers. In other words, as shown in Fig. 8, a wind tunnel apparatus is provided in a bypass circuit of a normal refrigerating cycle, the heat exchanger to be exposed to the test mentioned above is placed in the wind tunnel apparatus within a testing room under a constant temperature and humidity environment, a performance test is applied to each of the heat exchangers under a measuring condition in Table 2 mentioned below, and results thereof are shown in Fig. 9. In this case, the refrigerant employs R410A, and is flowed in accordance with upper and lower two stages so as to form a counter current with respect to an air side at the time of condensing.

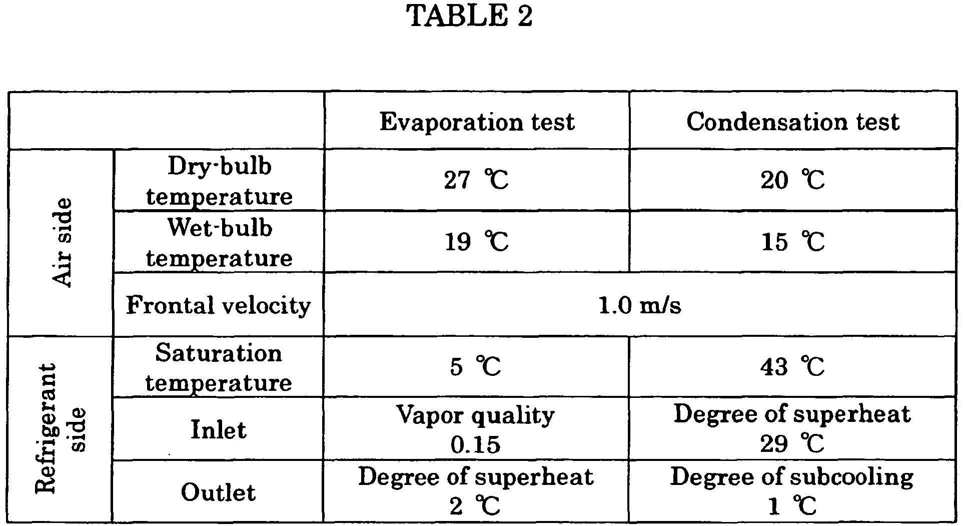

Fig. 9 shows a performance ratio of Examples 1 to 6 and Comparative Examples 2 and 3 with respect to Comparative Example 1 by setting the performance of the heat exchanger of Comparative Example 1 to reference (= 1.0). As is apparent from Fig. 9, all of Examples 1 to 6 exhibit high evaporation performance and high condensation performance in comparison with Comparative Example 1 in which the tube-expansion is executed by the smooth plug. It is recognized that the condensation performance is improved up to about 3 % at the maximum, and the evaporation performance is improved up to about 2 % at the maximum. This is because in Examples 1-6, due to the cross grooved inner surface of the tube, a collision energy between the refrigerants is increased in comparison with Comparative Example 1, whereby the turbulent flow facilitating effect is improved. Among them, the performances are particularly improved, in Example 3 and 4 in which the groove number of the secondary grooves is between 100 and 120 per circumference, because the number and the depth of the grooves notched by the tube-expanding plug have excellent balances, and the turbulent flow facilitating effect is distinguished. Accordingly, it is considered that the excellent performances are indicated.

On the contrary, in Comparative Example 2 in which the groove number of the secondary grooves 24 is 40 per circumference which is a smaller number than those of the Examples in accordance with the present invention, since the cross grooved portion is reduced and the sufficient turbulent flow facilitating effect can not be obtained, the performances are not improved. Further, since the depth d₂ of the secondary grooves 24 is too deep, the contact area between the refrigerant and the heat transfer tube is reduced, and both of the evaporation performance and the condensation performance are lowered. In particular, since the depth d₂ of the secondary grooves is too deep, the large burrs protrude to inner sides of the primary grooves 20 at a time of forming the secondary grooves 24, so that the pressure drop is significantly increased, and the evaporation performance is remarkably lowered. In addition, since the number of the protuberances applied to the tube-expanding plug is too small, the pressure which each of the protuberances applies to the internal fins is too great at the time of tube-expanding, so that the problems such as the abrasion and fracture of the plug tend to be generated, and the structure is not practical in view of a mass production.

On the other hand, in Comparative Example 3 in which the groove number of the secondary grooves 24 is 180 per circumference, which is more than that of Examples in accordance with the present invention, though the cross grooved portion is increased, since the depth of the notched secondary groove 24 is extremely shallow, it is impossible to obtain the turbulent flow facilitating effect to improve the performances and, on the contrary, the performances are lowered. Since irregularities in the leading end portions of the fins is remarkably increased by forming a great number of secondary grooves, the pressure drop are increased, so that the evaporation performance is extremely lowered.

As is apparent from the description mentioned above, in accordance with the method of manufacturing the cross fin tube for a heat exchanger on the basis of the present invention, it is possible to advantageously manufacture the cross fin tube having the improved evaporation performance and condensation performance, in which the contact area between the refrigerant flowing within the heat transfer tube and the heat transfer tube can be secured by the primary grooves which are previously formed within the internally grooved heat transfer tube, and the turbulent flow facilitating effect of the refrigerant can be advantageously achieved by the prescribed number of and the prescribed depth of secondary grooves formed to intersect the primary grooves. It is also possible to provide a cross fin type heat exchanger including the cross fin tube manufactured according to the manufacturing method in accordance with the present invention.

## Claims

1. A method of manufacturing a cross fin tube for a heat exchanger, said cross fin tube including an internally grooved heat transfer tube (10) having a multiplicity of primary grooves (20) formed in an inner surface thereof and heat dissipating fins (12), said heat transfer tube (10) and said heat dissipating fins (12) being fixed integrally to each other such that said heat transfer tube (10) is mechanically expanded by a tube-expanding plug (18) which is inserted into said heat transfer tube (10) with said heat transfer tube (10) being in a state in which said heat transfer tube (10) is inserted in fixing holes (14) of said heat dissipating fins (12), said method being **characterized in that**:
said tube-expanding plug (18) has cutout-forming protuberances (28) which are formed on an outer circumferential surface thereof with a number of 60-160 per circumference such that said cutout-forming protuberances (28) extend in a direction which intersects said primary grooves (20), said heat transfer tube (10) and said heat dissipating fins (12) being brought into intimate contact with each other when said tube-expanding plug (18) is inserted into said heat transfer tube (10), and that said cutout-forming protuberances (28) divide a ridge (22) located between adjacent two primary grooves (20) into sections to form notches, for thereby forming secondary grooves (24) which are cross grooves with respect to said primary grooves (20), said secondary grooves (24) having a depth (d2) which is held in a range of 10-40% of a height (d1) of said ridge (22) between said adjacent two primary grooves (20).

2. A method of manufacturing a cross fin tube for a heat exchanger according to claim 1, wherein said primary grooves (20) are spiral grooves which are formed to extend with a prescribed helix angle with respect to a tube axis of said heat transfer tube (10) while said secondary grooves (24) are substantially linear grooves which are formed to extend in a direction of said tube axis.

3. A method of manufacturing a cross fin tube for a heat exchanger according to claim 1 or 2, wherein a number of said primary grooves (20) is held in a range of 30-80 per circumference.

4. A method of manufacturing a cross fin tube for a heat exchanger according to any one of claims 1 to 3, wherein said primary grooves (20) have a cross sectional shape cut along a plane perpendicular to the direction of said tube axis of said heat transfer tube (10), said cross sectional shape being a trapezoid or a U-shape.

5. A method of manufacturing a cross fin tube for a heat exchanger according to any one of claims 1 to 4, wherein said helix angle of said primary grooves (20) with respect to said tube axis of said heat transfer tube (10) is held in a range of 10-50°.

6. A method of manufacturing a cross fin tube for a heat exchanger according to any one of claims 1 to 5, wherein said heat transfer tube (10) has an outside diameter of 4-10 mm, said primary grooves (20) have a depth of 0.10-0.30 mm, and said heat transfer tube (10) has a thickness of 0.20-0.30 mm at portions thereof at which said primary grooves (20) are formed and which define bottoms of said primary grooves (20).

7. A method of manufacturing a cross fin tube for a heat exchanger according to any one of claims 1 to 6, wherein said ridge (22) between said adjacent two primary grooves (20) has an apex angle which is held in a range of 15-50°.

8. A method of manufacturing a cross fin tube for a heat exchanger according to any one of claims 1 to 7, wherein a material of said heat transfer tube (10) is copper or a copper alloy.

9. A method of manufacturing a cross fin tube for a heat exchanger according to any one of claims 1 to 8, wherein a material of said heat dissipating fins (12) is aluminum or an aluminum alloy.

10. A method of manufacturing a cross fin tube for a heat exchanger according to any one of claims 1 to 9, wherein said secondary grooves (24) are formed in a shape of a V groove, a U groove or a trapezoidal groove.

## Patentansprüche

1. Verfahren zum Herstellen eines Kreuzrippenrohrs für einen Wärmetauscher, wobei das Kreuzrippenrohr ein mit innen liegenden Nuten versehenes Wärmeübertragungsrohr (10), das eine Vielzahl von in dessen Innenfläche ausgebildeten Primärnuten (20) hat, und Wärmeableitrippen (12) aufweist, wobei das Wärmeübertragungsrohr (10) und die Wärmeableitrippen (12) einstückig aneinander befestigt sind, indem das Wärmeübertragungsrohr (10) durch einen in das Wärmeübertragungsrohr (10) eingesetzten Rohraufweitungsstopfen (18) mechanisch aufgeweitet wird, wobei sich das Wärmeübertragungsrohr (10) in einem Zustand befindet, in welchem das Wärmeübertragungsrohr (10) in Befestigungslöcher (14) der Wärmeableitrippen (12) eingesetzt ist, wobei das Verfahren **dadurch gekennzeichnet ist, dass**
der Rohraufweitungsstopfen (18) einschnittbildende Vorsprünge (28) hat, die an dessen Außenumfangsfläche mit einer Anzahl von 60-160 Stück pro Umfang ausgebildet sind, sodass sich die einschnittbildenden Vorsprünge (28) in einer die Primärnuten (20) schneidenden Richtung erstrecken, wobei das Wärmeübertragungsrohr (10) und die Wärmeableitrippen (12) miteinander in engen Kontakt gebracht werden, wenn der Rohraufweitungsstopfen (18) in das Wärmeübertragungsrohr (10) eingesetzt wird, und dass die einschnittbildenden Vorsprünge (28) einen sich zwischen zwei Primärnuten (20) befindenden Grat (22) in Sektionen teilt, um Kerben auszubilden, um dadurch Sekundärnuten (24) auszubilden, welche mit Bezug auf die Primärnuten (20) Kreuznuten sind, wobei die Sekundärnuten (24) eine Tiefe (d2) haben, die in einem Bereich von 10-40% einer Höhe (d1) des Grats (22) zwischen den zwei benachbarten Primärnuten (20) gehalten ist.

2. Verfahren zum Herstellen eines Kreuzrippenrohrs für einen Wärmetauscher gemäß Anspruch 1, wobei die Primärnuten (20) Spiralnuten sind, die so ausgebildet sind, dass sie sich mit einem vorbestimmten Steigungswinkel mit Bezug auf eine Rohrachse des Wärmeübertragungsrohrs (10) erstrecken, während die Sekundärnuten (24) im Wesentlichen lineare Nuten sind, die so ausgebildet sind, dass sie sich in einer Richtung der Rohrachse erstrecken.

3. Verfahren zum Herstellen eines Kreuzrippenrohrs für einen Wärmetauscher gemäß Anspruch 1 oder 2, wobei eine Anzahl der Primärnuten (20) in einem Bereich von 30-80 pro Umfang gehalten ist.

4. Verfahren zum Herstellen eines Kreuzrippenrohrs für einen Wärmetauscher gemäß einem der Ansprüche 1 bis 3, wobei die Primärnuten (20) eine Querschnittsform haben, die entlang einer Ebene geschnitten ist, die senkrecht zu der Richtung der Rohrachse des Wärmeübertragungsrohrs (10) verläuft, wobei die Querschnittsform ein Trapez oder U-förmig ist.

5. Verfahren zum Herstellen eines Kreuzrippenrohrs für einen Wärmetauscher gemäß einem der Ansprüche 1 bis 4, wobei der Steigungswinkel der Primärnuten (20) mit Bezug auf die Rohrachse des Wärmeübertragungsrohrs (10) in einem Bereich von 10-50° gehalten ist.

6. Verfahren zum Herstellen eines Kreuzrippenrohrs für einen Wärmetauscher gemäß einem der Ansprüche 1 bis 5, wobei das Wärmeübertragungsrohr (10) einen Außendurchmesser von 4-10 mm hat, die Primärnuten (20) eine Tiefe von 0,10-0,30 mm haben, das Wärmeübertragungsrohr (10) eine Dicke von 0,20-0,30 mm an dessen Abschnitten hat, an denen die Primärnuten (20) ausgebildet sind und die die Böden der Primärnuten (20) definieren.

7. Verfahren zum Herstellen eines Kreuzrippenrohrs für einen Wärmetauscher gemäß einem der Ansprüche 1 bis 6, wobei der Grat (22) zwischen den zwei benachbarten Primärnuten (20) einen spitzen Winkel hat, der in einem Bereich von 15-50° gehalten ist.

8. Verfahren zum Herstellen eines Kreuzrippenrohrs für einen Wärmetauscher gemäß einem der Ansprüche 1 bis 7, wobei ein Material des Wärmeübertragungsrohrs (10) Kupfer oder eine Kupferlegierung ist.

9. Verfahren zum Herstellen eines Kreuzrippenrohrs für einen Wärmetauscher gemäß einem der Ansprüche 1 bis 8, wobei ein Material der Wärmeableitrippen (12) Aluminium oder eine Aluminiumlegierung ist.

10. Verfahren zum Herstellen eines Kreuzrippenrohrs für einen Wärmetauscher gemäß einem der Ansprüche 1 bis 9, wobei die Sekundärnuten (24) in einer Form einer V-Nut, einer U-Nut oder einer Trapez-Nut ausgebildet sind.

## Revendications

1. Procédé de fabrication d'un tube à ailettes transversales pour un échangeur de chaleur, ledit tube à ailettes transversales comportant un tube de transfert de chaleur rainuré intérieurement (10) ayant un grand nombre de rainures primaires (20) formées dans sa surface interne et des ailettes de dissipation de chaleur (12), ledit tube de transfert de chaleur (10) et lesdites ailettes de dissipation de chaleur (12) étant fixés d'un seul tenant les uns aux autres de sorte que ledit tube de transfert de chaleur (10) soit mécaniquement dilaté par un bouchon de dilatation de tube (18) qui est inséré dans ledit tube de transfert de chaleur (10) avec ledit tube de transfert de chaleur (10) dans un état dans lequel ledit tube de transfert de chaleur (10) est inséré dans des trous de fixation (14) desdites ailettes de dissipation de chaleur (12), ledit procédé étant **caractérisé en ce que** :
ledit bouchon de dilatation de tube (18) a des protubérances de formation de découpes (28) qui sont formées sur sa surface circonférentielle externe avec un nombre de 60 à 160 par circonférence de sorte que lesdites protubérances de formation de découpes (28) s'étendent dans une direction qui croise lesdites rainures primaires (20), ledit tube de transfert de chaleur (10) et lesdites ailettes de dissipation de chaleur (12) étant mis en contact intime les uns avec les autres lorsque ledit bouchon de dilation de tube (18) est inséré dans ledit tube de transfert de chaleur (10), et **en ce que** lesdites protubérances de formation de découpes (28) divisent une arête (22) située entre deux rainures primaires adjacentes (20) en des sections pour former des encoches, pour former ainsi des rainures secondaires (24) qui sont des rainures transversales par rapport auxdites rainures primaires (20), lesdites rainures secondaires (24) ayant une profondeur (d2) qui est maintenue dans une plage allant de 10 à 40% d'une hauteur (d1) de ladite arête (22) entre lesdites deux rainures primaires adjacentes (20).

2. Procédé de fabrication d'un tube à ailettes transversales pour un échangeur de chaleur selon la revendication 1, dans lequel lesdites rainures primaires (20) sont des rainures en spirale qui sont formées pour s'étendre avec un angle d'hélice prescrit par rapport à un axe de tube dudit tube de transfert de chaleur (10) tandis que lesdites rainures secondaires (24) sont des rainures essentiellement linéaires qui sont formées pour s'étendre dans une direction dudit axe de tube.

3. Procédé de fabrication d'un tube à ailettes transversales pour un échangeur de chaleur selon la revendication 1 ou 2, dans lequel un certain nombre desdites rainures primaires (20) est maintenu dans une plage allant de 30 à 80 par circonférence.

4. Procédé de fabrication d'un tube à ailettes transversales pour un échangeur de chaleur selon l'une quelconque des revendications 1 à 3, dans lequel lesdites rainures primaires (20) ont une forme de section transversale découpée le long d'un plan perpendiculaire à la direction dudit axe de tube dudit tube de transfert de chaleur (10), ladite forme de section transversale étant un trapèze ou une forme en U.

5. Procédé de fabrication d'un tube à ailettes transversales pour un échangeur de chaleur selon l'une quelconque des revendications 1 à 4, dans lequel ledit angle d'hélice desdites rainures primaires (20) par rapport audit axe de tube dudit tube de transfert de chaleur (10) est maintenu dans une plage allant de 10 à 50°.

6. Procédé de fabrication d'un tube à ailettes transversales pour un échangeur de chaleur selon l'une quelconque des revendications 1 à 5, dans lequel ledit tube de transfert de chaleur (10) a un diamètre extérieur allant de 4 à 10 mm, lesdites rainures primaires (20) ont une profondeur de 0,10 à 0,30 mm, et ledit tube de transfert de chaleur (10) a une épaisseur allant de 0,20 à 0,30 mm au niveau de ses parties au niveau desquelles lesdites rainures primaires (20) sont formées et qui définissent des parties inférieures desdites rainures primaires (20).

7. Procédé de fabrication d'un tube à ailettes transversales pour un échangeur de chaleur selon l'une quelconque des revendications 1 à 6, dans lequel ladite arête (22) entre lesdites deux rainures primaires adjacentes (20) a un angle de sommet qui est maintenu dans une plage allant de 15 à 50°.

8. Procédé de fabrication d'un tube à ailettes transversales pour un échangeur de chaleur selon l'une quelconque des revendications 1 à 7, dans lequel un matériau dudit tube de transfert de chaleur (10) est du cuivre ou un alliage de cuivre.

9. Procédé de fabrication d'un tube à ailettes transversales pour un échangeur de chaleur selon l'une quelconque des revendications 1 à 8, dans lequel un matériau desdites ailettes de dissipation de chaleur (12) est de l'aluminium ou un alliage d'aluminium.

10. Procédé de fabrication d'un tube à ailettes transversales pour un échangeur de chaleur selon l'une quelconque des revendications 1 à 9, dans lequel lesdites rainures secondaires (24) sont formées sous une forme de rainure en V, de rainure en U ou de rainure trapézoïdale.
